# EUROPÄISCHE PATENTSCHRIFT

(11) **EP 3 058 998 B1**
(45) Veröffentlichungstag und Bekanntmachung des Hinweises auf die Patenterteilung: **23.09.2020**
(21) Anmeldenummer: 16155785.5
(22) Anmeldetag: 16.02.2016
(51) Int. Cl.: B01D 35/02, B01D 35/06

(54) **FILTER FÜR HYDRAULIKÖL**
FILTER FOR HYDRAULIC OIL
FILTRE POUR HUILE HYDRAULIQUE

(30) Priorität: 20.02.2015 DE 102015102464
(43) Veröffentlichungstag der Anmeldung: 24.08.2016
(73) Patentinhaber: Lisa Dräxlmaier GmbH, 84137 Vilsbiburg (DE)
(72) Erfinder: Esterbauer, Peter, 5282 Ranshofen (AT); Ahiskali, Sedat, 5280 Braunau am Inn (AT)

(56) Entgegenhaltungen:
- WO-A1-2015/014432
- DE-A1- 2 235 246
- US-A- 5 411 659
- US-A1- 2011 253 607

## Beschreibung

### TECHNISCHES GEBIET

Die Erfindung betrifft einen Filter, mit dem Hydrauliköl von störenden Metallspänen gereinigt werden kann. Die Erfindung betrifft weiterhin ein Spritzgusswerkzeug und ein Zwischenstück in Verbindung mit Hydraulikleitungen.

### HINTERGRUND DER ERFINDUNG

In Spritzgussanlagen müssen Werkzeuge unter hohem Druck geschlossen, gehalten und dann wieder geöffnet werden. Hierzu kommen Hydraulikzylinder zum Einsatz, in denen Hydrauliköl fließt und die Werkzeuge bewegt. Werkzeug und Hydraulikzylinder sind typischerweise aus Metall.

Bei der Herstellung von Werkzeugen können feine Späne anfallen, die trotz bester Reinigung auch beim Betrieb sich noch in den Hydraulikleitungen befinden. Desweiteren können durch Abrieb an den Hydraulikzylinder weitere Metallspäne entstehen, die im Hydrauliköl zirkulieren und an Stellen geraten, an denen sie Dichtungen und Hydraulikzylinderflächen beschädigen können. Diese Beschädigungen führen wiederum zu Produktionsausfällen und erhöhen die Wartungs- und/oder Reparaturkosten.

Ähnliche Probleme treten auch an anderen hydraulisch betriebenen Anlagen oder Hydrauliköl nutzenden Anlagen auf.

Ölfilter, die einen Magnet und einen Spaltfilter nutzen, sind beispielsweise aus DE 1160970 B bekannt. Aus der Motortechnik sind beispielsweise in EP 0441367 A2 Ölfilter bekannt, die einen Magneten zumindest zeitweilig in den Ölkreislauf bringen und Metallpartikel aus dem Öl filtern können.

Aus JP H05329311 A ist ein Eisenpulver adsorbierender Filter bekannt, der über eine einem Permanentmagneten vorgelagerte Platte und darin befindliche Öffnungen, einen turbulenten Fluss des Hydrauliköls in einer Hydraulikleitung erzeugt. Der nachgelagerte Permanentmagnet beinhaltet Durchlassöffnungen, welche mit denen der vorgelagerten Platte übereinstimmen. Durch den turbulenten Fluss bilden sich nach dem Permanentmagneten sogenannte Eddies aus, welche durch den Verlust an kinetischer Energie des Hydrauliköls und der darin enthaltenen Partikel gekennzeichnet sind. Hierdurch können die Metallpartikel leichter von dem Permanentmagneten angezogen werden und können sich auf der Oberfläche des Permanentmagneten ablagern.

An den Oberflächen der Öffnungen im Permanentmagneten, durch welche die zu filternden Partikel hindurchfließen, können sich Metallpartikel durch die magnetische Anziehung des Permanentmagneten vermehrt anlagern. Dies ist problematisch, da die Öffnungen hierdurch verstopft werden können, was einen kürzeren Wartungsintervall und damit gesteigerte Kosten nach sich zieht.

Aus der US 5 411 659 A ist ein Filter mit Permanentmagnet in einem Kunststoffkörper bekannt, der zur Ölreinigung genutzt werden kann. Die DE 22 35 246 A1 zeigt ein Rücklauffilter für Hydrauliköl mit von Kunststoff umschlossenem Permanentmagnet und elastischer Dichtung. Weitere Filtereinrichtungen sind aus WO 2015/014432 A1 und US 2011/253607 A1 bekannt.

Es fehlen jedoch praktikable Lösungen, um das Hydrauliköl bestehender Anlagen kostengünstig zu reinigen.

### BESCHREIBUNG DER ERFINDUNG

Es ist eine Aufgabe der Erfindung, die vorgenannten Schwierigkeiten beim Betrieb von Hydraulikanlagen zu überwinden.

Die Aufgabe wird mit einem Filter mit den Merkmalen von Anspruch 1 und einem Spritzgusswerkzeug bzw. Zwischenstück mit den Merkmalen der Ansprüche 10 bzw. 12 gelöst. Vorteilhafte Ausgestaltungen der Vorrichtungen sind in den weiteren Patentansprüchen aufgeführt.

Dazu enthält der erfindungsgemäße Filter einen Permanentmagnet und einen Spritzgusskörper aus Kunststoff, der den Permanentmagnet umschließt. Der Permanentmagnet ist somit ortsfest im Spritzgusskörper gelagert und kann mit dem leicht und kostengünstig herstellbaren Spritzgusskörper in den Ölkreislauf eingebracht werden. Das Filter wird in einem Spritzgussschritt hergestellt, indem ein Permanentmagnet in die Spritzgussform eingelegt und mit einem Kunststoff, PBT / ASA GF15, umspritzt wird.

Der Spritzgusskörper weist mehrere Öffnungen auf, wobei die Öffnungen derart angeordnet sind, dass das Hydrauliköl seitlich am Permanentmagnet vorbeiströmt. Die Größe der Öffnungen ist an die zu erwartende Größe der Metallspäne angepasst, wobei im Wesentlichen die gröberen Späne herausgefiltert werden sollen. Bei einem Querschnitt von kleiner 2 mm, vorzugsweise kleiner 1 mm, jedoch größer als 0,5 mm, ist dies der Fall. Bei kreisrunden Öffnungen ist mit dem Querschnitt der Durchmesser gemeint. Der Magnet dient hingegen als Feinfilter für die feinen Späne.

Der Filter kann direkt vor einem (Vor- und Rücklauf) Hydraulikzylinder platziert werden, um zu verhindern, dass Späne in der Hydraulikzylinder gelangen und diese dort die Dichtungen und Hydraulikzylinderflächen beschädigen.

Der Spritzgusskörper ist so aufgebaut, dass er aus einem die Öffnungen enthaltenden Kragen und einem Grundkörper, der den Permanentmagnet umschließt, besteht. Der Kragen hat dabei einen größeren Durchmesser als der Grundkörper. Der Kragen ist im Wesentlichen senkrecht zur Flussrichtung des Öls in anschließenden Hydraulikleitungen ausgerichtet.

Für eine kostengünstige Herstellung und einen leichten Verbau ist der Spritzgusskörper vorteilhafterweise senkrecht zur Strömungsrichtung des Hydrauliköls radialsymmetrisch ausgebildet.

Um keine gesonderten Druckverhältnisse im Bereich des Filters aufzubauen, entspricht die Summe der Querschnittsflächen der Öffnungen vorteilhafterweise im Wesentlichen einer Querschnittsfläche einer Hydraulikleitung, in die der Filter eingesetzt wird. Der Ölfluss der Hydraulikleitung verteilt sich auf einzelne Ölflüsse durch den Filter und lagert dort grobe Späne ab.

Der Grundkörper besteht aus einem ersten und zweiten Abschnitt, die in Flussrichtung des Hydrauliköls beidseitig des Kragens angeordnet sind. Damit wird sichergestellt, dass im Verbau der Kragen beidseitig frei von Öl umströmt werden kann, da der Grundkörper eine Beabstandung von umliegenden Wandungen herstellt. Der zweite Abschnitt besteht aus mehreren Teilstücken, die dem Filter zusätzliche Vorzüge verleihen.

Die Teilstücke, beispielsweise in Form von Rippen, stehen vom Permanetmagneten ab, so dass zwischen den Teilstücken der Permanentmagnet vom Hydrauliköl umflossen wird. Die Rippen können dabei radial vom Permanentmagneten abstehen und bis zum Rand des Kragens reichen. Auf der Seite des Permanentmagneten haben die Rippen eine Länge die über den Permanentmagneten hinaussteht. Der durch die Rippen gebildete Querschnitt kann dabei als Einbauerleichterung dem Querschnitt des Kragens entsprechen. Die Anzahl der Rippen beträgt mindestens drei, besser vier.

Am vom Kragen abweisenden Ende können die Teilstücke eine Abstufung aufweisen und Nahe an einer Mittelachse des Filters kürzer sein als entfernt von der Mittelachse. Damit wird der Ölfluss in Nähe des Permanentmagneten verstärkt und damit die Filterwirkung gegen kleinere Metallspäne erhöht.

Weiterhin können sich die Teilstücke senkrecht von einer Mittelachse des Filters zu einem Filterrand erstrecken. Der Filter erhält damit einen festen Sitz nach dem Einbau.

Der Filter hat sich bereits für Hydraulikleitungen mit einem Durchmesser zwischen 4 und 10 mm bewährt, wobei für diese Durchmesser zwischen vier und 56 Öffnungen vorgesehen sind.

Damit sind dann kleine, kompakte Baugrößen erzielbar, so dass der Filter vorteilhafterweise einen Filterdurchmesser zwischen 8 und 20 mm und/oder eine Filterlänge zwischen 10 und 15 mm hat.

Wird der Filter vorteilhafterweise in eine Haltetasche mit Anschlag eingelegt, dann kann die Abdichtung weiter verbessert werden, in dem in den Mantel der Haltetasche eine Nut zum Einlegen eines Dichtungsrings (O-Ring) vorgesehen ist. Die Haltetasche hat dabei vorteilhafterweise eine Zylinderform mit einer Verengung als Anschlag auf einer Seite. Wird die Haltetasche aus Kunststoff dann im Spritzgusswerkzeug verbaut, dann kann sichergestellt werden, dass die gesamte Ölmenge direkt am Filter vorbeigeführt wird.

Der erfindungsgemäße Filter wird beispielsweise in einem Spritzgusswerkzeug mit einer Aussparung zur Aufnahme des Filters benutzt, wobei die Aussparung an einer Verbindungsstelle zur Verbindung mit einer Hydraulikleitung angeordnet ist. Hier muss nicht die Hydraulikleitung oder die umgebenden Bauteile verändert werden, sondern es reicht aus, für neue Werkzeuge eine Aussparung einzuplanen. Damit ist die erfindungsgemäße Lösung leichter nachrüstbar für bestehende Anlagen.

Vorteilhafterweise ist die Aussparung an der Verbindungsstelle zur Hydraulikleitung im Durchmesser größer als der Filter, so dass die Aussparung einen den Filter umschließenden Dichtring aufnehmen kann.

Eine alternative Anwendung des Filters ist ein Zwischenstück für eine Hydraulikleitung mit einem Öffnungs- und Schließmechanismus, so dass der Filter eingesetzt und gereinigt bzw. ausgetauscht werden kann, und einer Aussparung zur Aufnahme des erfindungsgemäßen Filters. Das Zwischenstück kann auch Teil anderer Werkzeuge sein, die mit Hydrauliköl bedient werden.

Darüber hinaus sind weitere Vorteile und Merkmale der vorliegenden Erfindung aus der folgenden Beschreibung bevorzugter Ausführungsformen ersichtlich. Die dort beschriebenen Merkmale können alleinstehend oder in Kombination mit einem oder mehreren der oben erwähnten Merkmale umgesetzt werden, insofern sich die Merkmale nicht widersprechen. Die folgende Beschreibung der bevorzugten Ausführungsformen erfolgt dabei unter Bezugnahme auf die begleitenden Zeichnungen.

### KURZE BESCHREIBUNG DER FIGUREN

Figur 1 zeigt ein erfindungsgemäßes Filter an der Verbindungsstelle zwischen Werkzeug und Hydraulikleitung.
Figur 2 zeigt ein Zwischenstück mit einem erfindungsgenäßen Filter.
Figuren 3 bis 6 zeigen verschiedene Varianten erfindungsgemäßer Filter.
Figur 7 zeigt einen Hydraulikzylinder und den Übergangsbereich zum Werkzeug.
Figur 8 zeigt den Ölfluss im Bereich des Filters.
Figuren 9 bis 12 zeigen einen erfindungsgemäßen Filter in einer Haltetasche und dessen Verbau.

### AUSFÜHRUNGSBEISPIELE

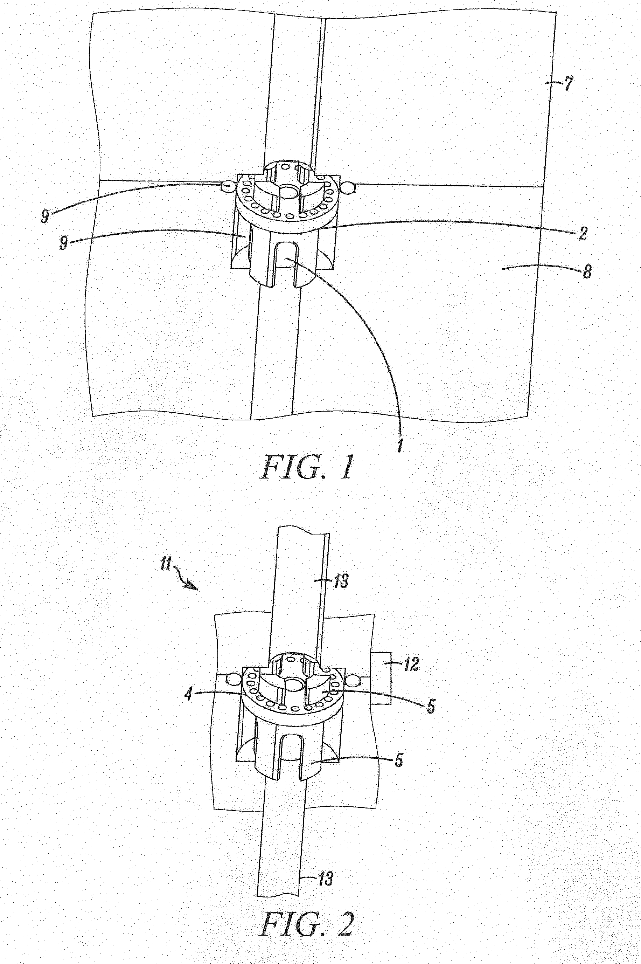

Figur 1 zeigt einen Übergang von einem Block eines Hydraulikzylinders 7 zu einem Spritzgusswerkzeug 8, wobei die Leitungen für ein Hydrauliköl aufeinander ausgerichtete sind. Normalerweise ist um die Hydraulikleitung lediglich ein Dichtungsring gelegt, um die Übergangsstelle abzudichten. An dieser Stelle ist nun zusätzlich eine Aussparung 9 in das Spritzgusswerkzeug 8 eingebracht. Dies befördert die Nachrüstbarkeit der Lösung, da üblicherweise das Werkzeug häufiger ausgetauscht wird als der Hydraulikzylinder. Die Aussparung könnte jedoch auch im Block des Hydraulikzylinders 7 vorgesehen sein.

In die Aussparung 9 ist ein Filter bestehend aus einem Spritzgusskörper 2 aus Kunststoff und einem Permanentmagneten 1 eingelegt. Das in den Hydraulikleitungen zirkulierende Hydrauliköl hat auf seinem Weg zu und vom Hydraulikzylinder 7 den Filter zu passieren und es kommt zur gewünschten Filterwirkung.

Der Filter kann jedoch auch in ein Zwischenstück 11, wie in Figur 2, eingesetzt werden. Das Zwischenstück 11 verbindet zwei Hydraulikleitungen 13 und hält einen kompakten Bauraum vor, der sich mit einem Öffnungs- und Schließmechanismus 12 öffnen lässt, um den Filter einzusetzen, und anschließend wieder zu verschließen. Dieses Zwischenstück 11 kann auch Teil eines anderen Werkzeugs sein. Der Einsatz der Erfindung ist nicht auf das Spritzgießen beschränkt.

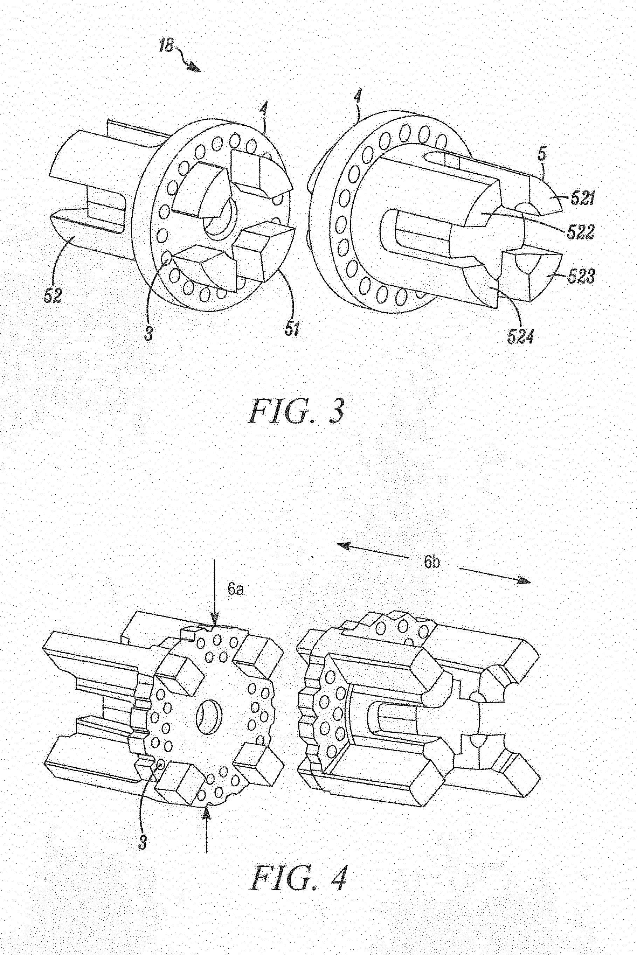

In den Figuren 3 bis 5 sind Filter gezeigt, die auf gängige Hydraulikleitungen abgestimmt sind.

Der Filter nach Figur 3 ist für Blockzylinder mit Anschlussbohrungen mit einem Durchmesser von 4 mm und 5 mm geeignet. Die Abmessungen des Filters sind Durchmesser 10 mm und Länge 11,4 mm. Ein Kragen 4 verbindet zwei Abschnitte 51, 52 eines Grundkörpers 5, wobei der zweite Abschnitt 52 aus vier Teilstücken 521, 522, 523, 524 besteht, die den Permanentmagneten umschließen. An der Peripherie des Kragens 4 ist eine Vielzahl von Öffnungen 3 angeordnet, die eine Grobfilterung des Hydrauliköls vornehmen.

Die vier Teilstücken 521, 522, 523, 524 reichen im eingebauten Zustand in das Spritzgusswerkzeug hinein und stützen sich innerhalb der Aussparung ab. Die Zwischenräume zwischen den Teilstücken 521, 522, 523, 524 ermöglichen es dem Hydrauliköl nahe am Permanentmagneten vorbeizuströmen und somit die Feinfilterung vorzunehmen.

Auch der erste Abschnitt 51 des Grundkörpers 5 weist vier Teilstücke auf, die den Filter in Richtung Hydraulikzylinder abstützen. Ein fester Sitz des Filters in der Aussparung ist wichtig. Auch hier erleichtern Zwischenräume zwischen den Teilstücken den Ölfluss hin zu den Öffnungen 3.

Der Kragen 4 hat einen größeren Durchmesser als der Grundkörper 5. Der Filter ist radialsymmetrisch ausgebildet, d.h. der Filter hat senkrecht zur Strömungsrichtung des Hydrauliköls eine im Wesentlichen kreisrunde Außenfläche, wobei zu einer Mittelachse des Filters die kreisrunde Form teilweise aufgebrochen ist.

Die Summe der Querschnittsflächen der Öffnungen 3 entspricht der Querschnittsfläche der Hydraulikleitung; je größer dieser Querschnitt, umso mehr Öffnungen 3 sind vorzusehen. Dies wird aus den weiteren Ausführungsbeispielen deutlich.

Die Filtervariante nach Figur 4 ist für Blockzylinder mit Anschlussbohrungen mit einem Durchmesser von 6 mm und 8 mm geeignet. Die Abmessungen des Filters betragen Durchmesser 6a 13 mm und Länge 6b 12,4mm. Die Teilstücke des zweiten Abschnitts stehen hier senkrecht vom Permanentmagneten in Richtung des Filterrandes ab und bilden so Rippen zur Versteifung, die auch den Einbau vereinfachen. Es sind insgesamt 28 Öffnungen 3 vorgesehen.

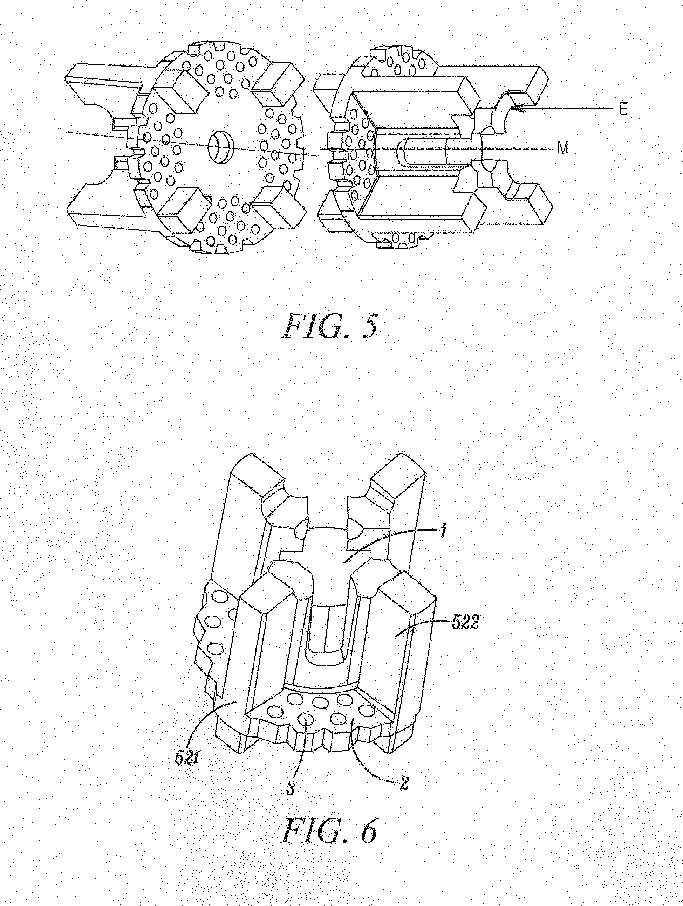

Die Filtervariante nach Figur 5 ist für Blockzylinder mit Anschlussbohrungen mit einem Durchmesser von 10 mm geeignet. Die Abmessungen des Filters betragen Durchmesser 16 mm und Länge 13,9 mm. Insgesamt 56 Öffnungen entsprechen hier der größeren Querschnittsfläche der Hydraulikleitung und sind radialsymmetrisch um eine Mittelachse M herum angeordnet. Am Ende E des zweiten Abschnitts des Grundkörpers ist eine Abstufung erkennbar. Zum Filterrand ist der Grundkörper länger und stützt sich fest am Werkzeug ab, währenddessen nahe am Permanentmagneten die kürzere Länge zu einem besseren Umströmen des Permanentmagneten führt.

Eine sehr kleine Variante des erfindungsgemäßen Filters ist in Figur 6 gezeigt. Zwischen den den Permanentmagneten 1 umschließenden Teilstücken 521, 522 des zweiten Abschnitts des Grundkörpers des Spritzgusskörpers 2 ist jeweils nur eine Öffnung 3 angeordnet. Der Permanentmagnet 1 hat unbedeckte Flächen zwischen den Teilstücken 521, 522, sowie am vom Kragen abweisenden Ende. An diesen Stellen ist die magnetische Anziehung für Metallspäne besonders stark und die Filterwirkung wird erhöht.

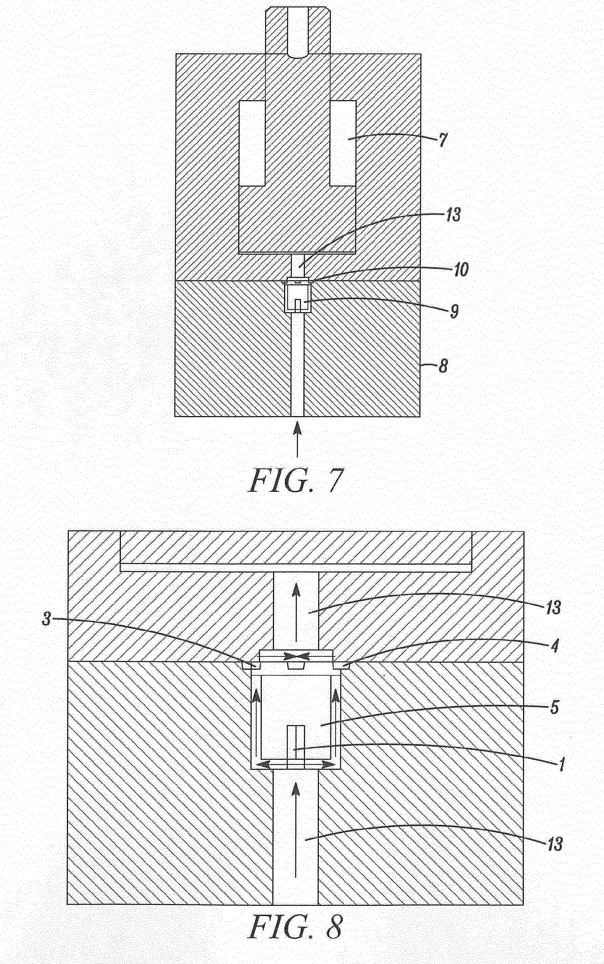

Die Anwendung des erfindungsgemäßen Filters für ein Spritzgusswerkzeug 8 ist in Figur 7 gezeigt. Ein Kolben in einem Hydraulikzylinder 7 wird nach unten bewegt und verdrängt das in der Hydraulikleitung 13 befindliche Hydrauliköl. Das Hydrauliköl wird durch den in der Aussparung 9 befindlichen Filter gepresst. Bewegt sich der Kolben nach oben, so ist die Flussrichtung des Öls durch den Filter umgekehrt.

Die Aussparung 9 ist an einer Verbindungsstelle zwischen Hydraulikleitung 7 und Spritzgusswerkzeug 8 angeordnet und zusätzlich durch einen Dichtring 10 abgedichtet. Der Dichtring als O-Ring liegt dabei um eine Filterspitze herum an einer Wandung der Hydraulikleitung 13 an. Die Aussparung 9 hat zur Aufnahme des Dichtrings 10 einen größeren Durchmesser als der Filter an dieser Stelle.

Der Ölfluss wird anhand der Figur 8 erläutert. Das Öl strömt von unten aus dem Spritzgusswerkzeug zum Filter und muss den im Grundkörper 5 des Filters gehaltenen Permanentmagneten 1 umströmen. Kleine Metallspäne werden am Permanentmagneten 1 festgehalten und lagern sich dort an. Die Flussrichtung des Öls, aufgeteilt in vier Teilströme passiert den Permanentmagneten 1 zwischen den Teilstücken des zweiten Abschnitts des Grundkörpers 5 und strömt seitlich am Permanentmagnet 1 vorbei nach oben, hin zum Kragen 4 des Filters. Im Kragen 4 befinden sich die Öffnungen 3, die so dimensioniert sind, dass größere Metallspäne die Öffnungen 3 nicht passieren können und somit verhindert wird, dass diese in den Hydraulikzylinder gelangen können. Das Öl, das die Öffnungen 3 passiert hat, strömt weiter in die Hydraulikleitung 13 des Hydraulikzylinders.

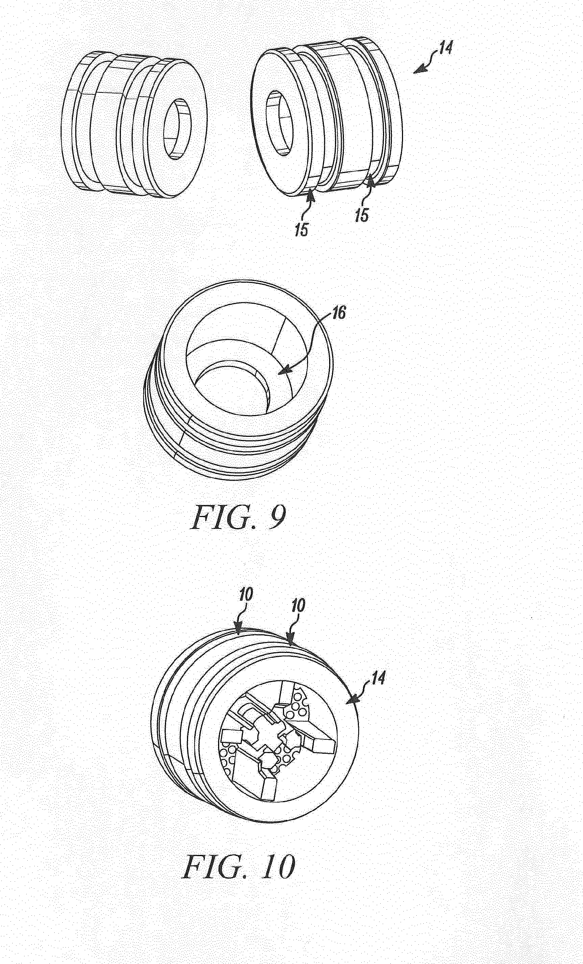

Figur 9 zeigt eine Haltetasche 14 aus unterschiedlichen Ansichten. Die Haltetasche 14 ist ein Spritzgussteil aus Kunststoff und hat eine Zylinderform. Die Haltetasche 14 hat eine Verengung als Anschlag 15 auf der einen Seite und eine Öffnung entsprechend dem Querschnitt des Kragens des Filters auf der anderen Seite. In der äußeren Mantelfläche des Zylinders sind zwei umlaufende Nute 16 eingebracht, die wie in Figur 10 deutlicher sichtbar, zur Aufnahme von Dichtringen 10 dienen. Die Nute 16 sind nahe beider Enden der Haltetasche 14 vorgesehen, um ein Kippeln der Haltetasche 14 nach dem Einbau zu verhindern. Die Länge der Haltetasche 14 entlang einer Mittelachse übersteigt dabei die Länge des Filters, so dass dieser vollständig von der Haltetasche 14 umgeben ist.

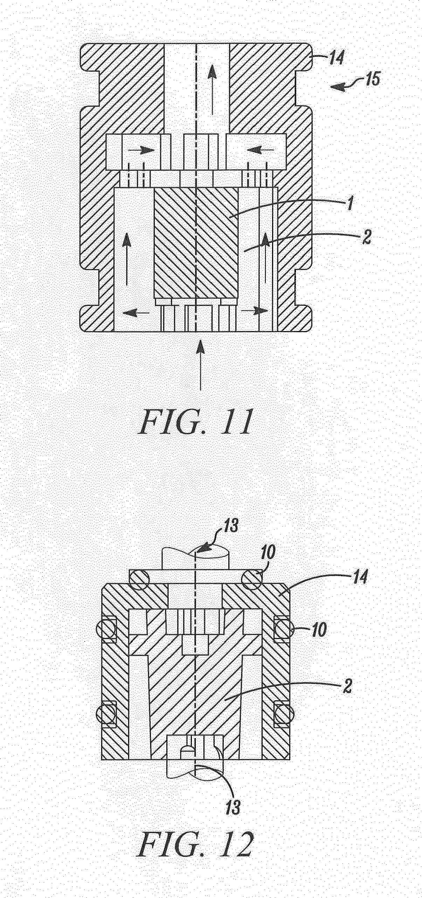

Eine Schnittdarstellung durch Filter und Haltetasche 14 ist aus Figur 11 ersichtlich. Wird die Haltetasche 14 aus Kunststoff dann im Spritzgusswerkzeug verbaut, dann kann sichergestellt werden, dass die gesamte Ölmenge direkt am Filter vorbeigeführt wird. Die Pfeile deuten dabei den Ölfluss durch die Haltetasche 14 entlang des Filters an. Figur 12 zeigt schließlich die Abdichtung der Haltetasche 14 mit Filter innerhalb eines Spritzgusswerkzeugs, eines Zwischenstücks oder einer Verbindungsstelle zur Hydraulikleitung. Beidseitig der Haltetasche 14 wird das Hydrauliköl über Hydraulikleitungen 13 heran- bzw. abgeführt. Die Haltetasche 14 selbst ist in einer Aussparung eingesetzt und gegen diese durch Dichtringe 10, die sowohl in die zuvor geschilderten Nute eingelegt sind als auch an einer Stirnseite angebracht sind, abgedichtet.

**BEZUGSZEICHENLISTE**

| | |
|---|---|
| Mittelachse | M |
| Ende des Grundkörpers | E |
| Permanentmagnet | 1 |
| Spitzgusskörper | 2 |
| Öffnung | 3 |
| Kragen | 4 |
| Grundkörper | 5 |
| erster und zweiter Abschnitt Grundkörper | 51, 52 |
| Teilstücke | 521, 522, 523, 524 |
| Filterdurchmesser | 6a |
| Filterlänge | 6b |
| Hydraulikzylinder | 7 |
| Spritzgusswerkzeug | 8 |
| Aussparung | 9 |
| Dichtring | 10 |
| Zwischenstück | 11 |
| Öffnungs-/Schließmechanismus | 12 |
| Hydraulikleitung | 13 |
| Tasche für Hydraulikfilter | 14 |
| Nut für Dichtring | 15 |
| Anschlag | 16 |

## Patentansprüche

1. Filter für Hydrauliköl, mit
• einem Permanentmagnet (1),
• einem Spitzgusskörper (2),
wobei
• der Spritzgusskörper (2) aus Kunststoff mit Öffnungen (3) besteht und den Permanentmagnet (1) derartig umschließt, dass der Permanentmagnet (1) ortsfest im Spritzgusskörper (2) gelagert ist,
**dadurch gekennzeichnet, dass**
• der Spritzgusskörper (2) einen Kragen (4), in dem die mehreren Öffnungen (3) mit einem Querschnitt von kleiner 2 mm, vorzugsweise kleiner 1 mm, angeordnet sind, und einem Grundkörper (5), der den Permanentmagnet (1) umschließt, besteht, wobei der Kragen (4) einen größeren Durchmesser aufweist als der Grundkörper (5), und
• der Grundkörper (5) aus einem ersten und zweiten Abschnitt (51, 52) besteht, die in Flussrichtung des Hydrauliköls beidseitig des Kragens (4) angeordnet sind, wobei
• der erste Abschnitt (51) aus mehreren voneinander beabstandeten Teilstücken und der zweite Abschnitt (52) aus mehreren vom Permanentmagneten (1) abstehenden Teilstücken (521, 522, 523, 524) besteht, so dass zwischen den Teilstücken (521, 522, 523, 524) der Permanentmagnet (1) seitlich vom Hydrauliköl umflossen wird.

2. Filter nach Anspruch 1, bei dem Spritzgusskörper senkrecht zur Strömungsrichtung des Hydrauliköls radialsymmetrisch ausgebildet ist.

3. Filter nach einem der vorherigen Ansprüche, bei dem die Summe der Querschnittsflächen der Öffnungen (3) im Wesentlichen einer Querschnittsfläche einer Hydraulikleitung (13) entspricht, in die der Filter eingesetzt wird.

4. Filter nach Anspruch 1, bei dem der zweite Abschnitt (52) aus mehreren vom Permanentmagneten (1) abstehenden Teilstücken (521, 522, 523, 524) besteht, die am vom Kragen (4) abweisenden Ende (E) eine Abstufung aufweisen und Nahe an einer Mittelachse (M) des Filters kürzer sind als entfernt von der Mittelachse (M).

5. Filter nach Anspruch 1, bei dem der zweite Abschnitt (52) aus mehreren vom Permanentmagneten (1) abstehenden Teilstücken (521, 522, 523, 524) besteht, die senkrecht von einer Mittelachse (M) des Filters sich zu einem Filterrand (R) erstrecken.

6. Filter nach einem der vorherigen Ansprüche, wobei zwischen vier und 56 Öffnungen (3) vorgesehen sind.

7. Filter nach einem der vorherigen Ansprüche, wobei der Filterdurchmesser (6a) zwischen 8 und 20 mm und/oder die Filterlänge (6b) zwischen 10 und 15 mm ist.

8. Filter nach einem der vorherigen Ansprüche, wobei der Filter in eine Haltetasche (14) mit Anschlag (16) derart eingelegt ist, dass der Filter an den Anschlag (16) anliegt.

9. Filter nach Anspruch 8, wobei die Haltetasche (14) zylinderförmig ist und im äußeren Zylindermantel mindestens eine Nut (15) umlaufend eingebracht ist.

10. Spritzgusswerkzeug (8) mit einem Filter nach einem der vorherigen Ansprüche und einer Aussparung (9) zur Aufnahme des Filters, wobei die Aussparung (9) an einer Verbindungsstelle zur Verbindung mit einer Hydraulikleitung (13) angeordnet ist.

11. Spritzgusswerkzeug (8) nach Anspruch 10, bei dem an der Verbindungsstelle zur Hydraulikleitung (13) die Aussparung (9) einen größeren Durchmesser als der Filter aufweist und zusätzlich einen, den Filter umschließenden Dichtring (10) aufnehmen kann.

12. Zwischenstück (11) für eine Hydraulikleitung (13), mit einem Öffnungs- und Schließmechanismus (12), einem Filter nach einem der Ansprüche 1 bis 9, und einer Aussparung (9) zur Aufnahme des Filters.

## Claims

1. Filter for hydraulic oil, having
• a permanent magnet (1),
• an injection-moulded body (2),
wherein
• the injection-moulded body (2) is composed of plastic with openings (3) and surrounds the permanent magnet (1) such that the permanent magnet (1) is mounted positionally fixedly in the injection-moulded body (2),
**characterized in that**
• the injection-moulded body (2) is composed of a collar (4), in which the multiple openings (3) are arranged with a cross section of smaller than 2 mm, preferably smaller than 1 mm, and of a main body (5), which surrounds the permanent magnet (1), wherein the collar (4) has a larger diameter than the main body (5), and
• the main body (5) is composed of a first and second portion (51, 52) which are arranged to both sides of the collar (4) in a flow direction of the hydraulic oil, wherein
• the first portion (51) is composed of multiple mutually spaced-apart parts and the second portion (52) is composed of multiple parts (521, 522, 523, 524) which project from the permanent magnet (1), such that, between the parts (521, 522, 523, 524), the permanent magnet (1) is flowed around laterally by the hydraulic oil.

2. Filter according to Claim 1, in which the injection-moulded body is of radially symmetrical form perpendicularly with respect to the flow direction of the hydraulic oil.

3. Filter according to any of the preceding claims, in which the sum of the cross-sectional areas of the openings (3) substantially corresponds to a cross-sectional area of a hydraulic line (13) into which the filter is inserted.

4. Filter according to Claim 1, in which the second portion (52) is composed of multiple parts (521, 522, 523, 524) which project from the permanent magnet (1) and which, at the end (E) averted from the collar (4), have a step and are shorter close to a central axis (M) of the filter than remote from the central axis (M).

5. Filter according to Claim 1, in which the second portion (52) is composed of multiple parts (521, 522, 523, 524) which project from the permanent magnet (1) and which extend perpendicularly from a central axis (M) of the filter to a filter edge (R).

6. Filter according to any of the preceding claims, wherein between four and 56 openings (3) are provided.

7. Filter according to any of the preceding claims, wherein the filter diameter (6a) is between 8 and 20 mm and/or the filter length (6b) is between 10 and 15 mm.

8. Filter according to any of the preceding claims, wherein the filter is placed into a holding pocket (14) with stop (16) such that the filter bears against the stop (16).

9. Filter according to Claim 8, wherein the holding pocket (14) is cylindrical, and at least one groove (15) is formed in encircling fashion in the external cylinder shell.

10. Injection-moulding tool (8) having a filter according to any of the preceding claims and having a recess (9) for receiving the filter, wherein the recess (9) is arranged at a connecting point for connection to a hydraulic line (13).

11. Injection-moulding tool (8) according to Claim 10, in which, at the connecting point to the hydraulic line (13), the recess (9) has a greater diameter than the filter and can additionally receive a sealing ring (10) which surrounds the filter.

12. Intermediate part (11) for a hydraulic line (13), having an opening and closing mechanism (12), having a filter according to any of Claims 1 to 9, and having a recess (9) for receiving the filter.

## Revendications

1. Filtre pour huile hydraulique, comprenant
• un aimant permanent (1),
• un corps moulé par injection (2),
• le corps moulé par injection (2) se composant de matière plastique avec des ouvertures (3) et entourant l'aimant permanent (1) de telle sorte que l'aimant permanent (1) est monté en position fixe dans le corps moulé par injection (2),
**caractérisé en ce que**
• le corps moulé par injection (2) se compose d'une collerette (4), dans laquelle sont disposées plusieurs ouvertures (3) ayant une section transversale inférieure à 2 mm, de préférence inférieure à 1 mm, et un corps de base (5) qui entoure l'aimant permanent (1), la collerette (4) présentant un diamètre supérieur au corps de base (5) et
• le corps de base (5) se compose d'une première et d'une deuxième portion (51, 52) qui sont disposées dans le sens d'écoulement de l'huile hydraulique des deux côtés de la collerette (4),
• la première portion (51) se composant de plusieurs pièces partielles espacées les unes des autres et la deuxième portion (52) de plusieurs pièces partielles (521, 522, 523, 524) faisant saillie de l'aimant permanent (1), de sorte que l'aimant permanent (1) est parcouru latéralement par le flux d'huile hydraulique entre les pièces partielles (521, 522, 523, 524).

2. Filtre selon la revendication 1, avec lequel le corps moulé par injection est formé avec symétrie radiale perpendiculairement à la direction d'écoulement de l'huile hydraulique.

3. Filtre selon l'une des revendications précédentes, avec lequel la somme des surfaces de section transversale des ouvertures (3) correspond sensiblement à une surface de section transversale d'une conduite hydraulique (13) dans laquelle est installé le filtre.

4. Filtre selon la revendication 1, avec lequel la deuxième portion (52) se compose de plusieurs pièces partielles (521, 522, 523, 524) faisant saillie de l'aimant permanent (1), lesquelles possèdent une gradation au niveau de l'extrémité (E) dirigée à l'opposé de la collerette (4) et sont plus courtes à proximité d'un axe central (M) du filtre qu'à distance de l'axe central (M).

5. Filtre selon la revendication 1, avec lequel la deuxième portion (52) se compose de plusieurs pièces partielles (521, 522, 523, 524) faisant saillie de l'aimant permanent (1), lesquelles s'étendent depuis un axe central (M) du filtre jusqu'à un bord de filtre (R).

6. Filtre selon l'une des revendications précédentes, entre quatre et 56 ouvertures (3) étant présentes.

7. Filtre selon l'une des revendications précédentes, le diamètre du filtre (6a) étant compris entre 8 et 20 mm et/ou la longueur du filtre (6b) entre 10 et 15 mm.

8. Filtre selon l'une des revendications précédentes, le filtre étant inséré dans une poche de maintien (14) munie d'une butée (16) de telle sorte que le filtre repose contre la butée (16).

9. Filtre selon la revendication 8, la poche de maintien (14) étant de forme cylindrique et au moins une rainure (15) circulaire étant incorporée dans l'enveloppe de cylindre externe.

10. Outil de moulage par injection (8) comprenant un filtre selon l'une des revendications précédentes et une cavité (9) destinée à accueillir le filtre, la cavité (9) étant disposée au niveau d'un point de connexion servant à la connexion avec une conduite hydraulique (13).

11. Outil de moulage par injection (8) selon la revendication 10, avec lequel la cavité (9), au niveau du point de connexion avec la conduite hydraulique (13), présente un diamètre supérieur à celui du filtre et peut en plus accueillir une bague d'étanchéité (10) qui entoure le filtre.

12. Pièce intermédiaire (11) pour une conduite hydraulique (13), comprenant un mécanisme d'ouverture et de fermeture (12), un filtre selon l'une des revendications 1 à 9 et une cavité (9) destinée à accueillir le filtre.
